# EUROPEAN PATENT SPECIFICATION

(11) **EP 2 260 157 B1**
(45) Date of publication and mention of the grant of the patent: **16.07.2014**
(21) Application number: 09713224.5
(22) Date of filing: 03.02.2009
(51) Int. Cl.: E04B 5/02, F16B 5/02

(54) **FLOOR ASSEMBLY AS WELL AS PANEL SUITABLE FOR SUCH A FLOOR ASSEMBLY**
BODENANORDNUNG SOWIE FÜR SOLCH EINE BODENANORDNUNG GEEIGNETE PLATTE
PLANCHER, AINSI QUE PANNEAU APPROPRIÉ POUR UN TEL PLANCHER

(30) Priority: 22.02.2008 NL 1035068
(43) Date of publication of application: 15.12.2010
(73) Proprietor: Kanaalbreedplaat B.V., 3016 BM Rotterdam (NL)
(72) Inventor: VAN DER ZANDEN, Gerardus cornelis maria, NL-6097 BT Heel (NL)
(74) Representative: Jansen, Cornelis Marinus
(86) International application number: PCT/NL2009/000023
(87) International publication number: WO 2009/104951

(56) References cited:
- EP-A1- 1 528 170
- WO-A1-90/13717
- WO-A1-93/16244
- CA-A- 586 557
- DE-A1- 1 658 930
- DE-A1-102004 003 366
- GB-A- 2 070 097
- NL-A- 7 116 071
- US-A- 3 546 830
- US-B1- 6 260 320

## Description

The invention relates to a floor assembly comprising at least two adjacent panels, which are each provided with ribs extending at least along sides of the panel, at least one rib being provided with at least one opening extending through the rib, through which a securing element extends for securing ribs extending parallel to each other of said adjacent panels together.

The invention also relates to a panel suitable for such a floor assembly.

In such an assembly, which is known from Canadian patent CA-586,557, the ribs and the beams extend on the underside of the panel, so that installing pipes and cables in the spaces located between the beams and the ribs and through the beams and the ribs is a laborious process, because the cables and pipes must be prevented from sagging under the influence of the force of gravity. The beams and the ribs are identical to each other, so that the mechanical behaviour of the floor assembly obtained at the location of the secured-together ribs of adjacent panels is different from that obtained at the location of the beams.

The object of the invention is to provide an improved floor assembly, in which the above-described drawbacks are obviated.

This object is accomplished with the floor assembly according to claim 1.

The beam strengthens the panel, whilst cables and/or pipes may extend through the channel in the beam. The cables and/or pipes are supported on the panel in that case.

Passages in the ribs and the channel in the beam are preferably in line with each other, so that laying the cables or the pipes through the ribs and beams is relatively easy.

The ribs are secured together and pulled together by means of the securing element, so that a strong connection between two adjacent panels is realised.

Since each panel is provided with ribs on two sides extending parallel to each other, it is possible to position a number of panels beside each other and connect said panels together in pairs.

Since the beam and the two secured-together ribs of adjacent panels are of substantially identical construction, the mechanical behaviour of the floor assembly near the beam is substantially the same as the mechanical behaviour of the two secured-together ribs of adjacent panels. As a result, a finishing floor present at the upper side of the panels is optimally supported by the ribs and the beam. Furthermore, it is thus possible to optimise the amount of material required for the ribs and the beams, so that a constructionally equivalent construction of the beam and the two secured-together ribs is obtained while using a minimum amount of material.

Such a constructional equivalence is obtained by the beam having the same length and height as a rib, but a thickness substantially twice that of a rib. Since the ribs are secured together by means of securing elements, which affect the mechanical behaviour of two secured-together ribs, the ribs may have a width which is not exactly half the width of a beam. The optimum dimensions both of the beam and of the ribs may be determined by experiment or by theoretic modelling.

It is noted that in a floor assembly which is known from U.S. patent US 3,546,830, a number of panels are positioned adjacent to each other, whilst ribs of two adjacent panels extend parallel to each other. The ribs are present on an underside of the panels. Each panel is bevelled on a side remote from the ribs, so that a V-shaped groove is formed between two adjacent panels. Said V-shaped groove is filled with concrete for the purpose of attaching the adjacent panels together.

A drawback of such a floor assembly is that concrete needs to be poured upon placement of the panels. If the concrete does not fill the V-shaped grooves completely, an uneven upper surface is obtained, whilst the poured concrete forms a projection on the panels if too much concrete is poured into the V shaped grooves.

US 6,260,320 discloses a concrete panel comprising a slab and a series of beams extending therefrom. Such panel can be used for forming a floor element with the beams facing upward or downward. All beams have the same cross section. Knockout plugs are provided in the beams for providing openings through which utility lines can be led. When the beams face upward standard flooring may be attached to the beams.

WO90/13717 discloses a floor panel having a concrete slab and beams extending along an upperside of the slab. The beams have a substantially T-shaped cross section. At opposite sides of the slab a rib extends, having a cross section which is half of that of a beam, such that if two such panels are positioned side by side, two adjacent ribs form the same cross section as a beam. Openings are provided in the beams and ribs for feeding utility lines therethrough. A floor can be placed directly on the beams and ribs.

GB 2070097 discloses a floor support system comprising panels having a slab and beams extending parallel to each other on an upperside thereof. Notches can be provided in an upper surface of the beams, for feeding utility lines. Adjacent panels can be bolted together. A floor can be formed on top of the panels.

One embodiment of the floor assembly according to the invention is characterised in that at least the ribs of adjacent panels are each provided with at least one opening extending through the ribs, whilst the securing element extend through opposed openings of ribs adjacent to each other.

After the panels have been positioned adjacent to each other, the securing element can be passed through the opposed openings and subsequently the panels can be secured together by means of a securing element.

Another embodiment of the floor assembly according to the invention is characterised in that the securing element comprises at least one bolt extending through the openings and a nut screwed onto said bolt.

The securing element may also comprise at least one stud and nuts screwed onto the two ends of said stud.

Such a bolt or stud can be readily passed through the opposed openings, whereupon the panels can be pulled tightly together by tightening (a) nut(s).

Another embodiment of the floor assembly according to the invention is characterised in that each opening tapers off in the direction of the associated panel, whilst the securing element comprises a conical element which is located in said tapered openings.

The conical element causes the panels to be aligned relative to each other upon being pulled against each other, thereby precisely positioning the panels relative to each other.

Yet another embodiment of the floor assembly according to the invention is characterised in that the securing element is connected to a rib of a first panel with one side, whilst the securing element extends through an opening in a rib of the adjacent second panel.

The securing element does not extend through the two ribs of adjacent panels, but it is connected to a rib of a first panel, which was realised during production of the panel, for example. A strong connection between the two adjacent panels is then realised by positioning the opening in the rib of the adjacent second panel over the securing element.

Yet another embodiment of the floor assembly according to the invention is characterised in that the rib is provided with a passage extending transversely through the rib.

Cables or pipes can be passed through the passage extending through the rib.

Yet another embodiment of the floor assembly according to the invention is characterised in that a support extending transversely to the rib is located between the ends of the rib and the beam or another rib.

The rib and the support preferably lie in a plane on a side remote from the panel, so that a wall can be positioned on the rib and/or the support in a simple manner. The rib and the support preferably extend on an upper side of the panel.

Another embodiment of the floor assembly according to the invention is characterised in that the rib is provided with a recess near one end thereof.

In such a recess, a cable duct can be provided in a simple manner, for example.

The invention will now be explained in more detail with reference to the drawings, in which:
Figure 1 is a perspective view of a panel of the floor assembly according to the invention and of securing elements to be connected to the panel;
Figure 2 is a perspective view of the panels shown in figure 1, with securing elements provided therein;
Figure 3 is a perspective view of a floor assembly built up of the panels and the securing elements shown in figures 1 and 2;
Figure 4 is a cross-sectional view of the floor assembly according to the invention in the direction indicated by the arrow IV-IV in figure 3;
Figure 5 is a cross-sectional view of the floor assembly according to the invention in the direction indicated by the arrow V-V in figure 3;
Figure 6 is a perspective view of the panel shown in figure 1, in which the panel supports a finishing floor;
Figure 7 is a larger-scale view of a part of the floor assembly shown in figure 6 at the location of the beam;
Figure 8 is a larger-scale view of a part of two coupled-together panels at the location of the ribs;
Figure 9 shows a second embodiment of a panel according to the invention;
Figure 10 shows a further embodiment of a panel according to the invention;
Figure 11 shows a fourth embodiment of a panel according to the invention.

Like parts are indicated by the same numerals in the figures.

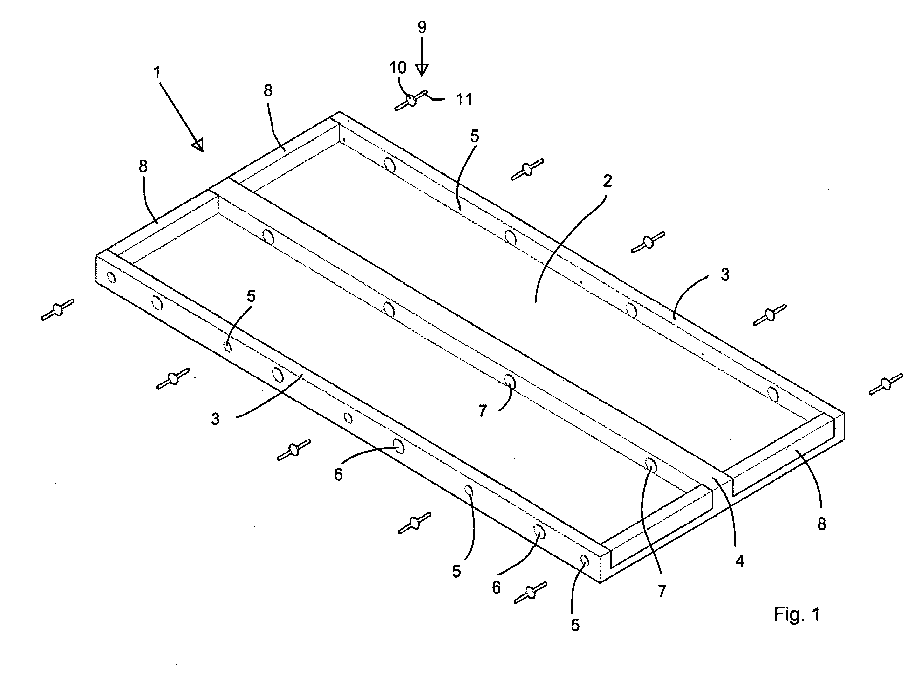

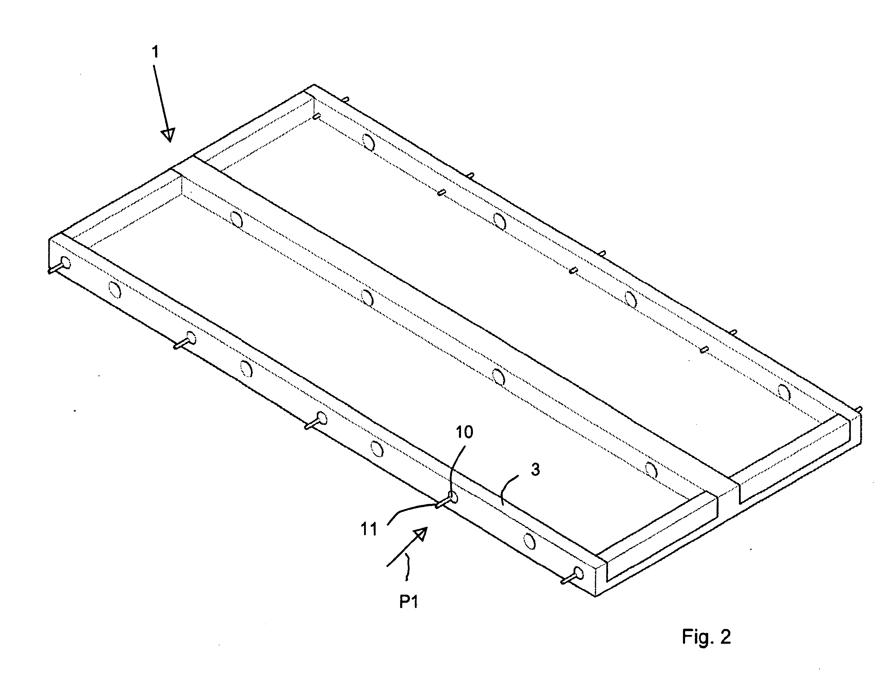

Figures 1-5 show a panel 1 according to the invention, which comprises a concrete slab 2, concrete ribs 3 extending along two sides of said concrete slab 2 and a concrete beam 4 extending between the ribs 3. The slab 2, the ribs 3 and the beam 4 are preferably formed as an integral whole. Each rib 3 is provided with a number of openings 5 extending transversely through the ribs 3 and with passages 6 located between said openings, which extend transversely through the ribs 3.

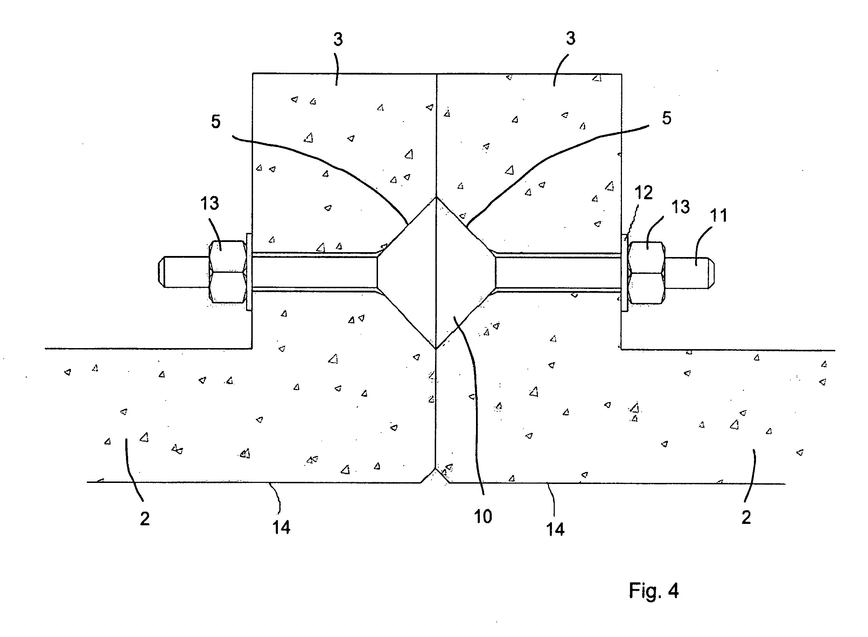

The openings 5 taper off from a side remote from the beam 4 to a side that faces the beam 4 (see figure 4). The beam 4 is provided with channels 7 extending transversely through the beam 4, which channels are coaxial with the passages 6 in the ribs 3. Concrete supports 8 are located between ends of the ribs 3 and the beam 4, which supports lie in the same plane, on a side remote from the slab 2, as the sides of the ribs 3 and the slab 4 remote from the slab 2.

The floor assembly according to the invention further comprises securing elements 9, which each comprise a conical element 10 and a stud 11 extending through the conical element 10. Washers 12 and nuts 13 can be attached to the two ends of the stud 11. To form a floor, a panel 1 is placed on a support with the ends of the ribs 3 and the beam 4, which are preferably located on an upper side of the slab 2. Following that, ends of the studs 11 are inserted in the direction indicated by the arrow P1 into the openings 5 of the rib 3 of the panel being placed, until the conical element 10 abuts against the tapered opening 5. A second panel 1 is then positioned beside the panel 1 that is already in place, and the studs 11 are passed through the openings 5 of the rib 3 that faces the panel 1 that is already in place. Washers 12 and nuts 13 are attached to both ends of the studs 11. The ribs 3 are moved together and secured together by tightening the nuts 13. The conical element 10 effects an alignment in horizontal direction is effected, as a result of which the ends of the ribs 3 are positioned in one plane. At the same time an alignment in vertical direction is taking place, as a result of which the undersides 14 (see figure 4) are positioned in one and the same plane.

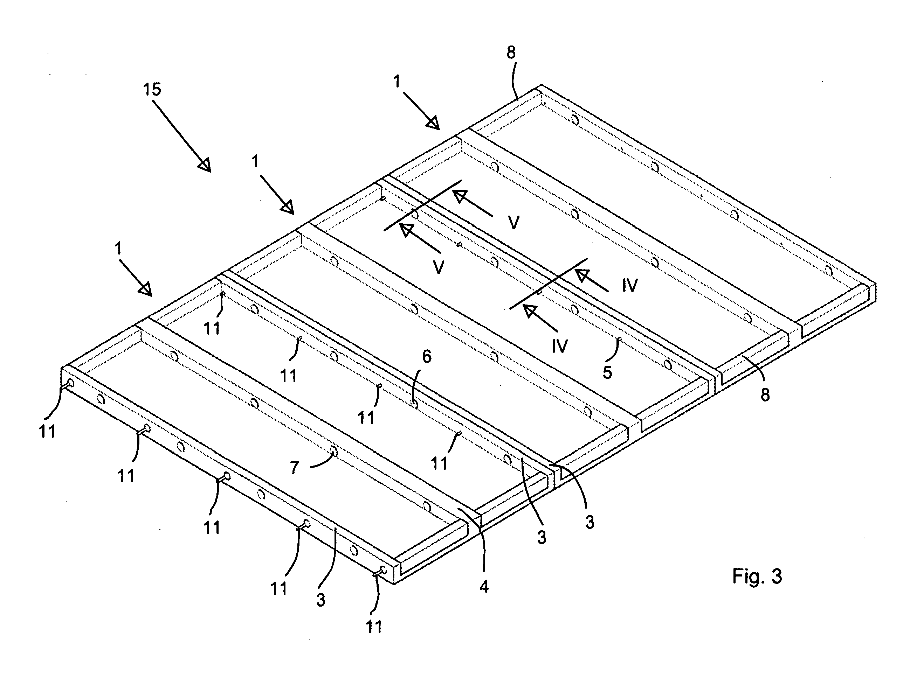

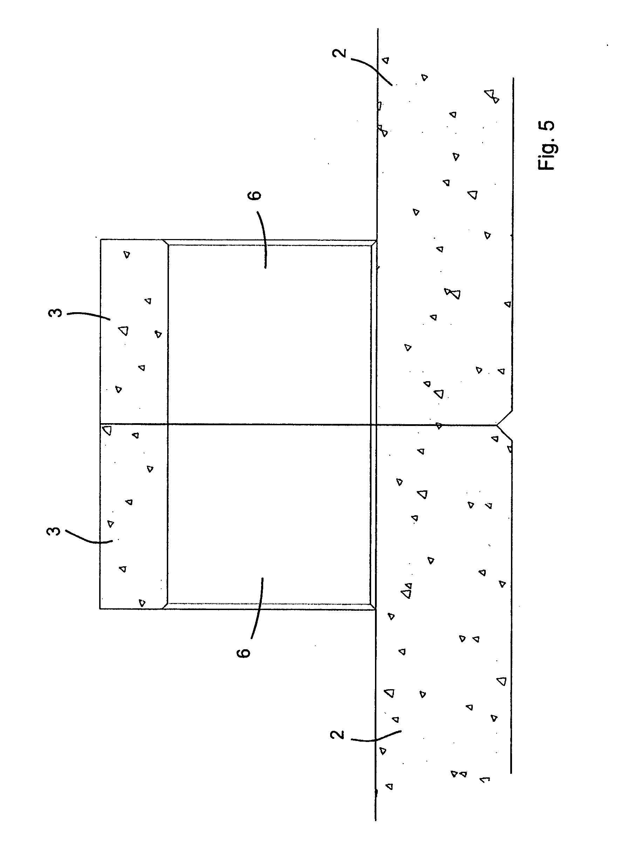

When adjacent panels 1 are secured together, a floor assembly 15 as shown in figure 3 is obtained. In the floor assembly 15 thus formed, the channels 6 in the ribs 3 likewise extend coaxially (see figure 5).

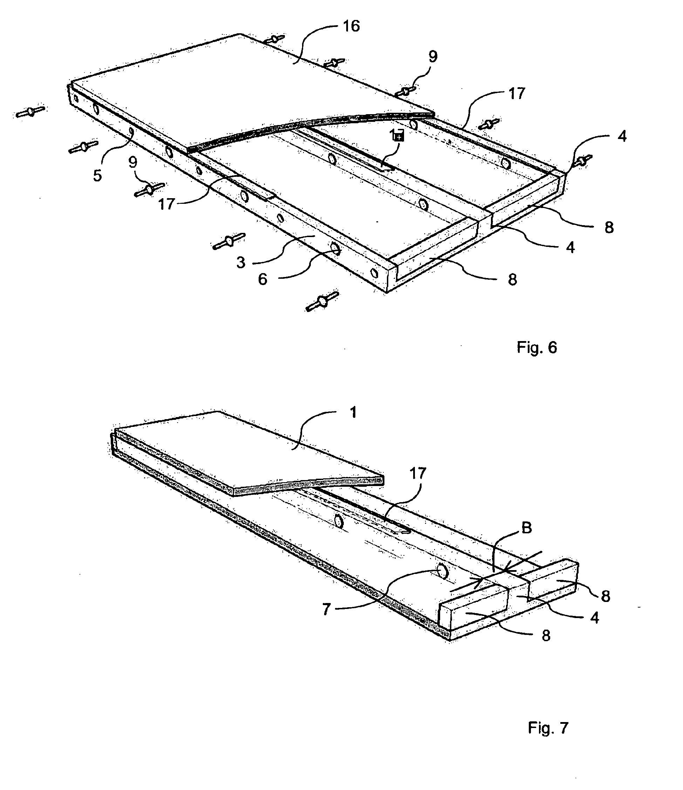

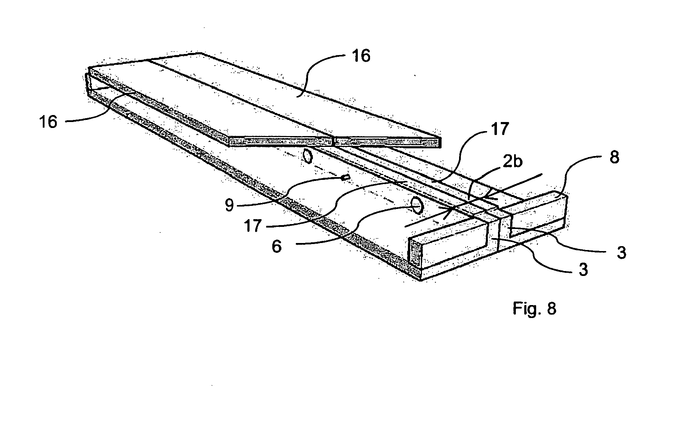

After the floor assembly 5 has been formed, cables and pipes can be laid on the slabs 2 through the openings 6 and the channels 7 across the entire floor assembly. Following that, a removable finishing floor 16 is laid on the floor assembly 15 (see figures 6-8).

Strips 17 are located between the finishing floor 16 and the ribs 3 and the beam 4, which strips separate the ribs 3 and the beam 4 on the one hand and the finishing floor 16 on the other hand acoustically and/or thermally from each other. The beam 4 and the ribs 3 secured together by means of the securing elements 9 have a width B and b, respectively. Said widths B, b have been determined by experiment or theoretically, such that the beam 4 and the secured-together ribs, which have an overall width 2b, will exhibit substantially the same mechanical behaviour.

When the short end sides of the panels 1 extending transversely to the ribs 3 are positioned on a separation between two spaces, it is possible to position a wall on the supports 8 and the ends of the beam 4 and the ribs 3 after the placement of the floor assembly 15.

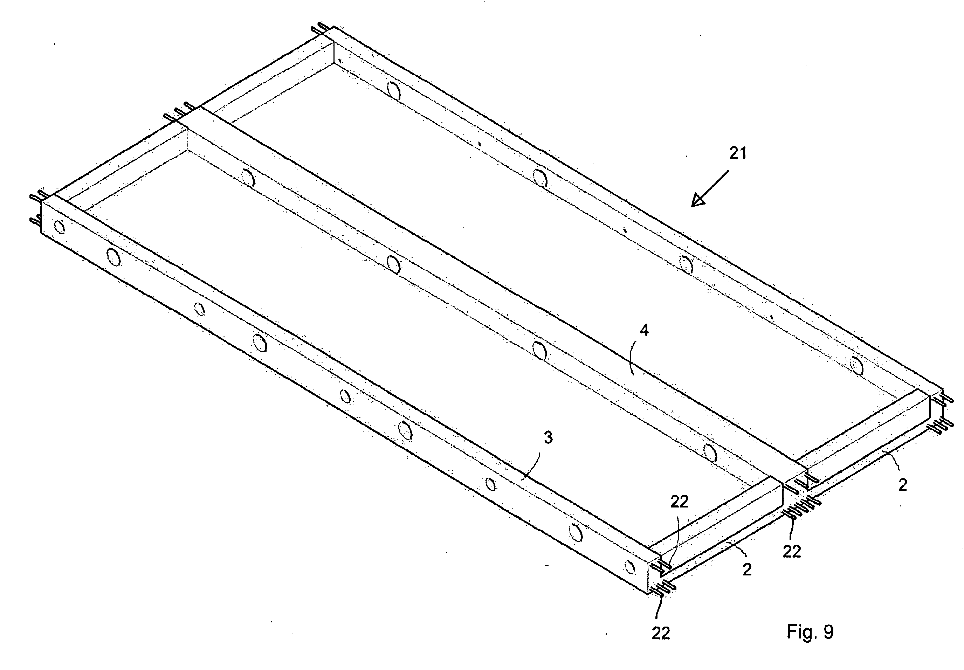

Figure 9 shows another embodiment of a panel 21 for use in the invention, which is different from the panel 1 in that the ribs 3, the beam 4 and the slab 2 are provided with tubes 22 extending in the longitudinal directions of the ribs 3 and the beam 4, in which cables or pipes can be laid.

The tubes 22 are provided in the slab 2 near the ribs 3 and the beam 4.

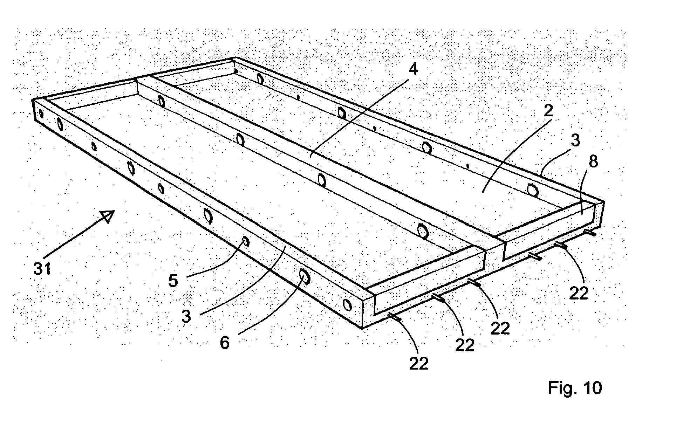

Figure 10 is a perspective view of a panel 31 for use in the invention, which is different from the panel 21 in that the tubes 22 are provided in the slab 2 between the ribs 3 and the beam 4. Such tubes 22 may be used as climate control pipes, for example.

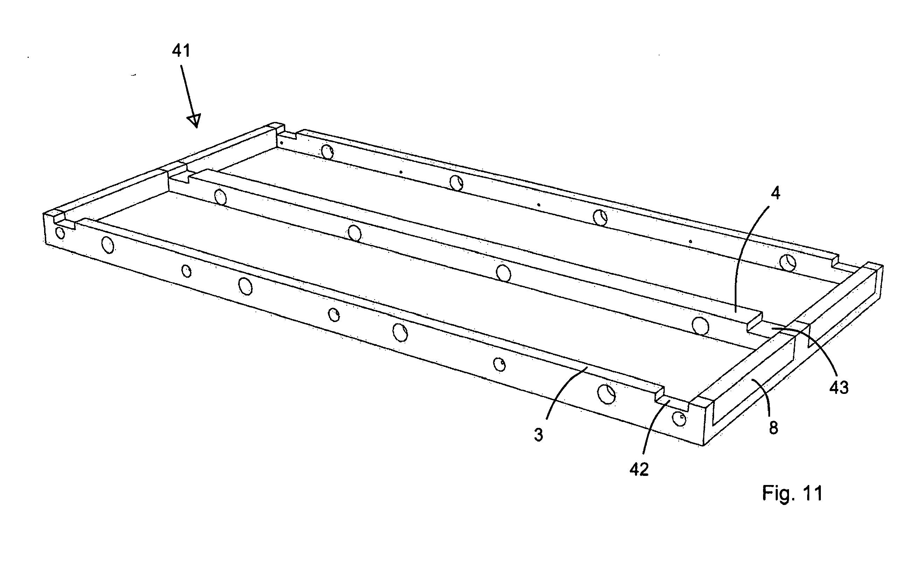

Figure 11 is a perspective view of a panel 41 for use in the invention, which is different from the panel 1 in that the ribs 3 and the beam 4 are provided with recesses 42, 43 near the supports 8, in which recesses a cable duct may be provided, for example.

According to another possibility, the supports 8 are integral with the rest of the panel 1.

It is possible to provide the ribs with a fire-resistant seal at the long sides and the short sides.

It is possible to provide the ribs 3 and the beams 4 with an acoustic separation layer or a sound-absorbing layer on a side remote from the slab 2.

It is also possible to anchor one end of a stud 11 in a rib, with the other end of the stud 11 extending through an opening in an adjacent rib.

The stud 11 may also be movable with respect to the conical element 10, in which case the stud 11 has been moved so far into the conical element 10 upon positioning the panels beside each other that the stud 11 does not form a projection. After said positioning, the stud 11 can be passed through the conical element 10 and the opening 5 of the adjacent rib 3.

It is also possible to leave out the conical element 10.

It is also possible to have the ribs extend both along the long sides and along the short sides of the slab 2, so that the panels can be secured together both on their long sides and on their short sides.

Instead of using bolts of studs, it is also possible to secure the panels together by means of other securing elements, for example turnpin-like or pop rivet-like elements.

## Claims

1. A floor assembly comprising at least two adjacent panels (1), which are each provided with a slab (2), ribs (3) extending at least along sides of the panel (1), at least one rib (3) being provided with at least one opening (5) extending through the rib (3), through which a securing element (9) extends for securing ribs (3) extending parallel to each other of said adjacent panels (1) together, wherein each panel (1) at the upper side thereof is furthermore provided with at least one beam (4) extending parallel to the ribs (3), which beam (4) is provided with a channel (7) extending transversely to the beam (4), **characterised in that** the beam (4) has the same length and height as the ribs (3), but a thickness substantially twice that of the ribs (3) and the beam (4) and the two secured-together ribs (3) of adjacent panels (1) are of substantially identical construction for uniformly supporting a finishing floor (16) supported by the ribs (3) and the beam (4), wherein an acoustic separation layer or sound absorbing layer is provided on a side of the ribs (3) and beams (4) opposite the slab (2), by strips (7) between the ribs (3) and beams and a finishing floor (16), wherein the finishing floor (16) is removably laid on the panel (1).

2. A floor assembly according to claim 1, **characterised in that** at least the ribs (3) of adjacent panels (1) are each provided with at least one opening (5) extending through the ribs (3), whilst the securing element (9) extend through opposed openings (5) of ribs (3) adjacent to each other.

3. A floor assembly according to claim 2, **characterised in that** the securing element (9) comprises at least one bolt extending through the openings (5) and a nut screwed onto said bolt.

4. A floor assembly according to claim 2, **characterised in that** the securing element (9) comprises at least one stud (11) and nuts (13) screwed onto the two ends of said stud (11).

5. A floor assembly according to any one of the preceding claims, **characterised in that** each opening (5) tapers off in the direction of the associated panel (1), whilst the securing element (9) comprises a conical element (10) which is located in said tapered openings (5).

6. A floor assembly according to claim 1, **characterised in that** the securing element (9) is connected to a rib (3) of a first panel (1) with one side, whilst the securing element (9) extends through an opening (5) in a rib (3) of the adjacent second panel (1).

7. A floor assembly according to claim 6, **characterised in that** the securing element (9) comprises a stud (11), a first end of which is anchored in the rib (3) of the first panel (1), which stud (11) extends through the opening (5) of the adjacent rib (3) of the second panel (1) and which is provided with a nut (13) on a second end thereof.

8. A floor assembly according to any one of the preceding claims, **characterised in that** the rib (3) is provided with a passage (6) extending transversely through the rib (3).

9. A floor assembly according to claim 8, **characterised in that** the passage (6) in the rib (3) and the channel (7) in the beam (4) are in line with each other.

10. A floor assembly according to any one of the preceding claims, **characterised in that** a support (8) extending transversely to the rib (3) is located between the ends of the rib (3) and the beam (4).

11. A floor assembly according to any one of the preceding claims, **characterised in that** the rib (3) is provided with a recess (42, 43) near one end.

## Patentansprüche

1. Bodenanordnung, umfassend mindestens zwei angrenzende Platten (1), die jeweils versehen sind mit einem Brett (2), Rippen (3), verlaufend mindestens entlang den Seiten der Platte (1), wobei mindestens eine Rippe (3) mit mindestens einer Öffnung (5), verlaufend durch die Rippe (3), versehen ist, durch die ein Sicherungselement (9) zum Sichern der Rippen (3), verlaufend parallel zueinander von den angrenzenden Platten (1), verläuft, wobei jede Platte (1) an ihrer oberen Seite ferner mit mindestens einem Balken (4), verlaufend parallel zu den Rippen (3), versehen ist, wobei dieser Balken (4) mit einem Kanal (9), verlaufend quer zu dem Balken (4), versehen ist, **dadurch gekennzeichnet, dass** der Balken (4) dieselbe Länge und Höhe wie die Rippen (3) aber eine Dicke, die im Wesentlichen das Zweifache von jener der Rippen (3) ist, aufweist, und der Balken (4) und die beiden aneinander befestigten Rippen (3) von angrenzenden Platten (1) von im Wesentlichen identischer Bauweise sind, um einen Abschlussboden (16), gestützt von den Rippen (3) und dem Balken (4), gleichmäßig zu unterstützen, wobei eine akustische Trennschicht oder schallabsorbierende Schicht an einer Seite der Rippen (3) und Balken (4) gegenüber dem Brett (2) bereitgestellt ist durch Streifen (7) zwischen den Rippen (3) und Balken und einem Abschlussboden (16), wobei der Abschlussboden (16) entfernbar auf der Platte (1) platziert ist.

2. Bodenanordnung nach Anspruch 1, **dadurch gekennzeichnet, dass** mindestens die Rippen (3) von angrenzenden Platten (1) jeweils mit mindestens einer Öffnung (5), verlaufend durch die Rippen (3), versehen sind, während das Sicherungselement (9) durch gegenüberliegende Öffnungen (5) von Rippen (3), aneinander angrenzend, verläuft.

3. Bodenanordnung nach Anspruch 2, **dadurch gekennzeichnet, dass** das Sicherungselement (9) mindestens einen Bolzen, verlaufend durch die Öffnungen (5), und eine am Bolzen verschraubte Mutter umfasst.

4. Bodenanordnung nach Anspruch 2, **dadurch gekennzeichnet, dass** das Sicherungselement (9) mindestens einen Bolzen (11) und Muttern (13), verschraubt an den zwei Enden des Bolzens (11), umfasst.

5. Bodenanordnung nach einem der vorhergehenden Ansprüche, **dadurch gekennzeichnet, dass** jede Öffnung (5) in Richtung der zugehörigen Platte (1) abgeschrägt ist, während das Sicherungselement (9) ein kegelförmiges Element (10) umfasst, das in den schrägen Öffnungen (5) angeordnet ist.

6. Bodenanordnung nach Anspruch 1, **dadurch gekennzeichnet, dass** das Sicherungselement (9) mit einer Rippe (3) einer ersten Platte (1) mit einer Seite verbunden ist, während das Sicherungselement (9) durch eine Öffnung (5) in einer Rippe (3) der angrenzenden zweiten Platte (1) verläuft.

7. Bodenanordnung nach Anspruch 6, **dadurch gekennzeichnet, dass** das Sicherungselement (9) einen Bolzen (11) umfasst, dessen erstes Ende in der Rippe (3) der ersten Platte (1) verankert ist, wobei der Bolzen (11) durch die Öffnung (5) der angrenzenden Rippe (3) der zweiten Platte (1) verläuft, und wobei er mit einer Mutter (13) an einem zweiten Ende davon versehen ist.

8. Bodenanordnung nach einem der vorhergehenden Ansprüche, **dadurch gekennzeichnet, dass** die Rippe (3) mit einem Durchgang (6) versehen ist, der quer durch die Rippe (3) verläuft.

9. Bodenanordnung nach einem der vorhergehenden Ansprüche, **dadurch gekennzeichnet, dass** der Durchgang (6) in der Rippe (3) und der Kanal (7) in dem Balken (4) zueinander ausgerichtet sind.

10. Bodenanordnung nach einem der vorhergehenden Ansprüche, **dadurch gekennzeichnet, dass** ein quer zu der Rippe (3) angeordneter Träger (8) zwischen den Enden der Rippe (3) und dem Balken (4) angeordnet ist.

11. Bodenanordnung nach einem der vorhergehenden Ansprüche, **dadurch gekennzeichnet, dass** die Rippe (3) nahe einem Ende mit einer Vertiefung (42, 43) versehen ist.

## Revendications

1. Plancher comprenant au moins deux panneaux adjacents (1), qui sont chacun pourvu d'une plaque (2), de nervures (3) s'étendant au moins le long de côtés du panneau (1), au moins une nervure (3) étant pourvue d'au moins une ouverture (5) s'étendant à travers la nervure (3), à travers laquelle un élément de fixation (9) s'étend pour fixer des nervures (3) s'étendant parallèles l'une à l'autre desdits panneaux (1) adjacents ensemble, dans lequel chaque panneau (1) au niveau du côté supérieur de celui-ci est en outre pourvu d'au moins une poutre (4) s'étendant parallèle aux nervures (3), laquelle poutre (4) est pourvue d'un canal (7) s'étendant transversalement à la poutre (4), **caractérisé en ce que** la poutre (4) a les mêmes longueur et hauteur que les nervures (3), mais une épaisseur sensiblement double de celle des nervures (3) et de la poutre (4) et les deux nervures (3) fixées ensemble de panneaux (1) adjacents sont de construction sensiblement identique pour supporter uniformément un plancher de finition (16) supporté par les nervures (3) et la poutre (4), dans lequel une couche de séparation acoustique ou une couche d'absorption sonore est placée sur un côté des nervures (3) et des poutres (4) à l'opposé du panneau (2), par des bandes (7) entre les nervures (3) et des poutres et un plancher de finition (16), dans lequel le plancher de finition (16) est posé de manière amovible sur le panneau (1).

2. Plancher selon la revendication 1, **caractérisé en ce qu'**au moins les nervures (3) de panneaux (1) adjacents sont chacune pourvues d'au moins une ouverture (5) s'étendant à travers les nervures (3), alors que l'élément de fixation (9) s'étend à travers des ouvertures (5) opposées de nervures (3) adjacentes.

3. Plancher selon la revendication 2, **caractérisé en ce que** l'élément de fixation (9) comprend au moins une vis s'étendant à travers les ouvertures (5) et un écrou vissé sur ladite vis.

4. Plancher selon la revendication 2, **caractérisé en ce que** l'élément de fixation (9) comprend au moins un goujon (11) et des écrous (13) vissés sur les deux extrémités dudit goujon (11).

5. Plancher selon l'une quelconque des revendications précédentes, **caractérisé en ce que** chaque ouverture (5) s'évase dans la direction du panneau (1) associé, alors que l'élément de fixation (9) comprend un élément conique (10) qui est situé dans lesdites ouvertures (5) coniques.

6. Plancher selon la revendication 1, **caractérisé en ce que** l'élément de fixation (9) est relié à une nervure (3) d'un premier panneau (1) avec un côté, alors que l'élément de fixation (9) s'étend à travers une ouverture (5) dans une nervure (3) du second panneau (1) adjacent.

7. Plancher selon la revendication 6, **caractérisé en ce que** l'élément de fixation (9) comprend un goujon (11), dont une première extrémité est ancrée dans la nervure (3) du premier panneau (1), lequel goujon (11) s'étend à travers l'ouverture (5) de la nervure (3) adjacente du second panneau (1) et qui est pourvu d'un écrou (13) sur une seconde extrémité de celui-ci.

8. Plancher selon l'une quelconque des revendications précédentes, **caractérisé en ce que** la nervure (3) est pourvue d'un passage (6) s'étendant transversalement à travers la nervure (3).

9. Plancher selon la revendication 8, **caractérisé en ce que** le passage (6) dans la nervure (3) et le canal (7) dans la poutre (4) sont alignés ensemble.

10. Plancher selon l'une quelconque des revendications précédentes, **caractérisé en ce qu'**un support (8) s'étendant transversalement à la nervure (3) est situé entre les extrémités de la nervure (3) et de la poutre (4).

11. Plancher selon l'une quelconque des revendications précédentes, **caractérisé en ce que** la nervure (3) est pourvue d'un évidement (42, 43) près d'une extrémité.
